# FASCICULE DE BREVET EUROPEEN

(11) **EP 0 993 939 B1**
(45) Date de publication et mention de la délivrance du brevet: **11.01.2006**
(21) Numéro de dépôt: 99402542.7
(22) Date de dépôt: 15.10.1999
(51) Int. Cl.: B32B 15/04, B23K 20/02, C22C 47/00

(54) **Procédé d'obtention de pièces métalliques minces, légères et rigides**
Verfahren zur Herstellung dünner, leichter und starrer Metallwerstücken
Method of manufacturing thin, light and rigid metal pieces

(30) Priorité: 15.10.1998 FR 9812917
(43) Date de publication de la demande: 19.04.2000
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Girault, Daniel Georges, 77000 Melun (FR); Gauthier, Gérard Philippe, 91240 Saint Michel sur Orge (FR); Molliex, Ludovic Edmond Camille, 91800 Brunoy (FR)

(56) Documents cités:
- US-A- 4 469 757
- US-A- 5 429 877

## Description

### Domaine technique de l'invention.

L'invention se rapporte à un procédé de fabrication de pièces métalliques à structure sandwich renforcées par des fibres à haut module d'élasticité et assemblées par soudage-diffusion.

### Etat de la technique et problème à résoudre.

On utilise en aéronautique des pièces minces et légères réalisées en alliages métalliques à haut rapport résistance/masse, soit principalement les alliages d'aluminium, de magnésium et de titane. Dans le cas des turbomoteurs, ce sont typiquement les carters, les bras de carters et les aubes. De tels alliages présentant cependant l'inconvénient d'avoir un module d'Young réduit, et les pièces réalisées avec ces alliages doivent en conséquence être renforcées par des nervurages afin de présenter une rigidité suffisante. La présence des ces nervurages a cependant l'inconvénient d'augmenter la masse de la pièce. De plus, ces nervurages peuvent prendre des formes complexes et leur réalisation peut en conséquence devenir très coûteuse.

On utilise aussi aujourd'hui en aéronautique des matériaux composites constitués de fibres de renfort noyées dans une matrice métallique, les fibres pouvant être en carbure de silicium sic, en bore ou en carbone, et la matrice en alliage d'aluminium, de magnésium et de titane. De tels matériaux ont des propriétés mécaniques sensiblement améliorées par rapport au même alliage de matrice employé seul. A titre d'exemple, si on compare un composite constitué de fibres de carbure de silicium SiC noyées dans une matrice en alliage de titane Ta6V avec l'alliage de titane Ta6V employé seul, on constate que la résistance mécanique est augmentée de 120%, que le module d'Young est augmenté de 100% alors que la masse spécifique est réduite de 15%.

Les matériaux composites à matrice métallique sont obtenus essentiellement en comprimant fortement à la température de formage superplastique de l'alliage métallique une préforme constituée de fibres de renfort et d'alliage métallique, les fibres pouvant être tissées ou bobinées, l'alliage métallique pouvant se présenter sous la forme de feuillards disposés entre les fibres, sous la forme d'un revêtement appliqué autour des fibres par le procédé appelé "physical vapor deposition" ou "CVD", l'alliage métallique pouvant aussi être appliqué par projection plasma sur les fibres tissées ou bobinées. La compression à chaud peut s'effectuer en matrice sur une presse lorsque la forme de la pièce le permet, c'est à dire lorsqu'elle est de forme à dominante plane. Dans le cas contraire, la compression peut aussi être effectuée en autoclave, la pièce étant alors entourée d'un conteneur, c'est à dire d'une enveloppe métallique étanche dans laquelle le vide est fait, la pièce pouvant aussi être appuyée contre une forme. De tels procédés permettent de réaliser des pièces composites minces aux propriétés mécaniques améliorées par rapport à une même pièce en alliage métallique. Toutefois, l'utilisation de ces procédés pour la réalisation de grosses pièces dans la totalité de leur épaisseur nécessiterait la mise en oeuvre d'une quantité importante de fibre, alors que seules les fibres à la surface de la pièce participant à la raideur de cette pièce selon un principe bien connu en résistance des matériaux. Ainsi, du fait que l'achat et la mise en oeuvre de ces fibres à haute résistance sont très coûteux, le prix de revient de telles pièces serait prohibitif.

On réalise aussi des pièces mixtes comportant une partie en composite fibre + alliage métallique et une partie en alliage métallique seul. Pour fabriquer de telle pièces, on usine une ébauche de la seconde partie et on comprime ensemble la première et la seconde partie selon le procédé général précité, cette compression à chaud réalisant un soudage des deux parties par diffusion mutuelle de l'alliage de chaque partie dans l'autre partie.

D'une manière générale, la constitution et la compression à chaud d'une pièce en matériau composite comportant des fibres de renfort à haut module d'élasticité noyées dans une matrice en alliage métallique reste une opération délicate, car ces fibres ne supportent pas sans se rompre des courbures importantes du fait de leur haut module d'élasticité. Comme les pressions requises aussi bien pour la densification que pour le soudage-diffusion sont très élevées, on respecte habituellement les conditions suivantes pour ne pas casser les fibres :
- les fibres sont disposées régulièrement en nappes parallèlement les unes à côté des autres,
- le procédé doit permettre, lors de la densification, une grande homogénéité d'écoulement de la matrice autour des fibres afin de ne pas provoquer, sous l'effet de la pression, des déplacements localisés desdites fibres qui risqueraient de les rompre.

A titre d'exemple, la compression et le soudage-diffusion d'un matériau composite constitué de fibres de renfort en carbure de silicium Sic avec une matrice en alliage de titane Ta6V nécessitent une pression de 600 à 800 bars à une température de l'ordre de 900°C.

### Exposé de l'invention.

L'invention propose un procédé de réalisation de pièces métalliques minces et rigides, ledit procédé comportant les opérations suivantes :
- réalisation d'une âme en alliage métallique,
- application sur chaque face de l'âme d'une peau en matériau composite comportant des fibres de renfort noyées dans un alliage métallique, lesdites fibres ayant un module d'élasticité au moins égal à quatre fois celui dudit alliage métallique.
- densification des peaux par compression au moins dans le sens de l'épaisseur à la température de superplasticité de l'alliage métallique entourant les fibres,
- soudage-diffusion desdites peaux sur l'âme par compression au moins dans le sens de l'épaisseur à la température de diffusion des alliages métalliques des peaux et de l'âme.

Un tel procédé est remarquable en ce que :
- on réalise dans l'âme une pluralité de cavités débouchantes au moins sur une face de ladite âme, par exemple par perçage, par électroérosion ou par poinçonnage, avec une fraction volumique de l'âme la plus faible possible, par exemple 0,9, la fraction volumique de l'âme étant le rapport V/Vₐ dans lequel Va est le volume de l'âme pleine et V le volume de la matrice restante de l'âme après la réalisation des cavités, lesdites cavités étant régulièrement réparties sur la pièce,
- on densifie les peaux à la forme de l'âme préalablement à leur application sur l'âme.

Ceci a pour effet de constituer dans la pièce des cavités fermées au moins d'un côté par les peaux avec un fluage négligeable desdites peaux à l'intérieur desdites cavités, et pour résultat simultanément d'alléger et de rigidifier les pièces sans augmenter leur épaisseur.

La courbure des fibres de renfort est maintenue sensiblement constante au-dessus de chaque cavité, et dans le voisinage de chacune d'elle, ce qui permet simultanément de ne pas casser les fibres ou de n'en casser qu'une proportion négligeable, ainsi que de laisser ces fibres dans la meilleure position pour assurer la résistance et la rigidité de la pièce.

Ainsi, et contrairement à ce qu'on aurait pu penser, il est possible de comprimer, dans les conditions précitées et sans fluage notable dans les cavités des peaux composites constituée de fibres de renfort à haut module d'élasticité noyées dans une matrice en alliage métallique sur une âme comportant elle-même une multitude de cavités ouvertes à sa surface, la densification préalable des peaux apportant auxdites peaux une rigidité suffisante pour en limiter le fluage dans les cavités à des valeurs négligeables.

Avantageusement, les alliages métalliques seront pris dans le groupe comprenant le titane, l'aluminium et le magnésium, et les fibres de renfort dans le groupe comprenant le carbure de silicium, le bore et le carbone, afin d'associer un alliage métallique léger à des fibres de renfort à haute résistance et à haut module d'élasticité.

Dans une première forme de réalisation de l'invention, le soudage-diffusion est réalisé en matrice à la presse, par exemple avec une matrice chauffante ou avec un four-presse. Une telle disposition a pour effet de maintenir l'épaisseur moyenne de matière entre les cavités à une valeur suffisante compatible avec le procédé de compression employé, et pour résultat d'empêcher l'écrasement de l'âme pendant la compression en matrice;

Dans une forme préférée de mise en oeuvre du procédé, les peaux sont soudées sur l'âme par compression isostatique en autoclave. Il faut alors limiter la largeur des cavités à une valeur compatible avec ce type de compression. On peut alors appliquer le présent procédé à des pièces impossibles à réaliser en matrice, par exemple des carters de turbomachine. On comprend que la pression appliquée sur la pièce par l'intermédiaire d'un fluide, en l'occurrence le gaz de l'autoclave favorise le fluage des peaux dans les cavités. Il a cependant été constaté que ce fluage peut être considéré comme étant négligeable, lorsque les dimensions des cavités restent inférieures à une certaine limite qui dépend des propriétés de la peau composite, ce qui autorise dans ces conditions la fabrication de pièces de qualité aéronautique ou aérospatiale.

Avantageusement, on adoptera une fraction volumique de l'âme minimale, afin de réduire la masse de l'âme et d'alléger les pièces à résistance et rigidité égale.

Avantageusement aussi, on augmentera la fraction volumique de l'âme V/Vₐ au voisinage des zones de liaison de la pièce. Ceci a pour effet d'augmenter à ces endroits la résistance à l'écrasement de la pièce et pour résultat d'autoriser le boulonnage de la pièce avec des couples de serrage élevés. Dans un mode particulier de réalisation, l'âme sera pleine au voisinage immédiat desdits organes de liaison.

Avantageusement, on peut usiner dans l'âme des cavités jointives selon des lignes appropriées. Ceci a pour effet de constituer entre les peaux des conduits et pour résultat de permettre des circulations de fluide dans l'épaisseur de la pièce. Ceci est particulièrement intéressant dans le cas de pièces structurales de turbomachine telles les carters et les bras de carters : on peut ainsi distribuer du lubrifiant, du carburant ou du gaz à diverses température, notamment pour le contrôle des jeux de fonctionnement.

Avantageusement ces cavités jointives ne débouchent chacune que d'un seul côté de l'âme, afin de maintenir la cohésion de ladite âme pendant la réalisation de la pièce.

Avantageusement, la pièce étant une aube de turbomachine comportant une pale et un pied à une extrémité, l'âme s'étendant dans la pale et dans le pied, on réalisera des cavités avec une fraction volumique de l'âme V/Vₐ réduite dans l'âme de la pale, et on réalisera éventuellement des cavités avec une fraction volumique de l'âme V/Vₐ élevée dans le pied, ce qui permet de réaliser des aubes très légères qui pourront cependant supporter des sollicitations d'encastrement importantes au pied. Avantageusement, l'aube sera réalisée en matrice, ce qui autorise des fractions volumiques de l'âme faibles, donc un gain de masse important.

### Description des figures.

L'invention sera mieux comprise et les avantages qu'elle procure apparaîtront plus clairement au vu d'un exemple détaillé de réalisation et des figures annexées.

La figure 1 illustre par une vue en coupe une paroi de carter.

Les figures 2 et 3 illustrent des formes possibles des cavités usinées dans l'âme.

La figure 4 illustre par un graphique les résultats obtenus dans le cas de fibres de carbure de silicium Sic et d'un alliage métallique à base titane Ta6V.

### Description détaillée.

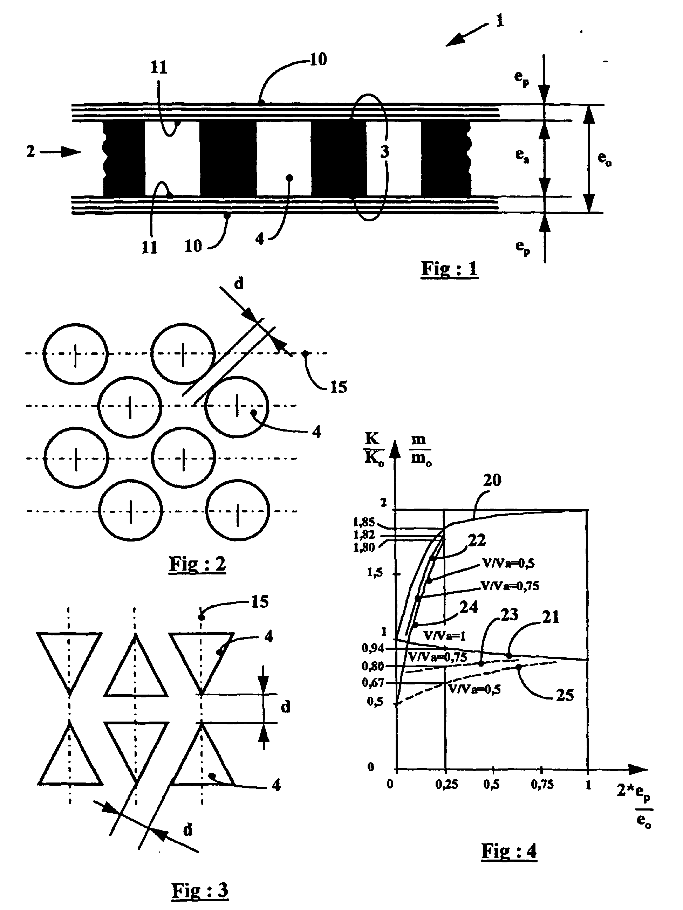

On se reportera en premier lieu à la figure 1. La pièce 1 est mince et comporte une âme 2 également mince et délimitée dans le sens de son épaisseur par deux faces 3. L'âme 2 comporte une pluralité de cavités 4 débouchant chacune au moins sur l'une des faces 3 de l'âme 2. Dans cet exemple, les cavités 4 débouchent chacune sur les deux faces 3 de l'âme 2. Sur chacune des faces 3 de l'âme 2 est soudée par diffusion une peau 10. On référencera 11 les faces intérieures des peaux 10 par lesquelles le soudage-diffusion est effectué, ce soudage-diffusion consistant en une interpénétration par diffusion des matières de l'âme 2 et des peaux 10 au niveau des faces 3 et 11 respectivement de l'âme 2 et des peaux 10 en contact mutuel. On comprend que les cavités 4 sont fermées par les peaux 10. En pratique, ces cavités 4 seront cylindriques. Dans l'exemple de la figure 2, ces cavités 4 ont une section circulaire et sont disposées en quinconce le long de lignes 15 sensiblement parallèles, la distance d entre une cavité 4 et chacune de ses voisines étant sensiblement constante au moins localement, c'est à dire dans une zone limitée. Dans l'exemple de la figure 3, les cavités 4 sont triangulaires et disposées tête-bêche le long de lignes 15 sensiblement parallèles, les sommets des triangles d'une ligne 15 étant inversés par rapport aux sommets des triangles des deux lignes 15 voisines, la distance d entre les sommets et/ou les côtés d'un triangle et de tous les triangles voisins étant sensiblement constante. Par ailleurs, les sommets des triangles sont arrondis afin de réduire les concentrations de contraintes qu'ils pourraient provoquer dans le matériau de l'âme 2.

Dans cet exemple, l'âme 2 est en alliage métallique à base titane Ta6V et les peaux sont en composite constitué de fibres de renfort en carbure de silicium sic noyées dans une matrice en alliage métallique à base titane Ta6V également.

### Le procédé est le suivant :

Fabrication de l'âme 2 à la forme de la pièce 1, par exemple par laminage, forgeage, usinage ; réalisation des cavités 4 directement à la fonderie, ou par perçage, poinçonnage, électroérosion ; les cavités 4 pouvant être réparties régulièrement sur la pièce 1 et/ou interrompue afin de renforcer l'âme 2 localement lorsqu'il y a par exemple des points d'application de charges ponctuelles ou des bossages ; usinage et décapage des faces 3 de l'âme 2.

Fabrication des peaux 10 en matériau composite à matrice métallique grâce à une opération de pressage à chaud (compactage isostatique à chaud ou pressage uniaxial à la presse, en matrice s'il y a lieu), avec des conditions de température et de pression qui permettent de densifier ce matériau à partir de l'une des techniques habituelles : fibre + feuillard, monocouches renforcées, préimprégnés obtenus par plasma, bobinage de fibres revêtues par PVD (Bhysical Vapor Déposition) ou autre procédé équivalent. Usinage et décapage de la face intérieure 11 des peaux 10. Ces peaux 10 comportant le nombre de couches de fibres exigé pour obtenir la raideur et la résistance mécanique que l'on désire.

Afin de réaliser l'assemblage par soudage-diffusion des peaux 10 sur l'âme 2, il faut :
- usiner les faces 3 de l'âme 2 si nécessaire ;
- nettoyer, décaper chimiquement et rincer les faces 3 de l'âme 2 et les faces intérieures 11 des peaux 10, afin de les préparer au soudage par diffusion ;
- assembler les peaux 10 sur l'âme 2 et disposer l'ensemble dans un outillage de pressage ou dans un conteneur capable de la compression isostatique à chaud en autoclave, et comprimer en respectant les cycles de pression et de température adaptés aux alliages constituant l'âme 2 et la matrice des peaux 10 afin d'effectuer le soudage-diffusion des peaux 10 sur l'âme 2.

On se reportera maintenant simultanément aux figures 1 et 4. On désignera en premier lieu : eₒ l'épaisseur de la pièce 1, eₐ l'épaisseur de l'âme 2, ep l'épaisseur de chaque peau 10 avec la relation eₒ=2eₚ+eₐ. On désignera aussi : K la raideur de la pièce obtenue avec le présent procédé, Kₒ la raideur de cette même pièce 1 monolithique, c'est à dire tout métal et sans cavités 4, M la masse de la pièce obtenue avec le présent procédé, et Mₒ masse de la pièce monolithique. On désignera enfin : Vₐ le volume total de l'âme 2, V le volume de matière de l'âme 2 restant après la réalisation des cavités 4, et V/Vₐ la fraction volumique de l'âme.

L'abscisse du graphique représente la fraction d'épaisseur des peaux 10, soit 2.eₚ/eₒ, cette fraction ne pouvant évidemment varier qu'entre 0 et 1.

Les courbes 20 et 21 représentent respectivement les variations des rapports K/Kₒ et M/Mₒ en fonction de la fraction d'épaisseur des peaux 2.eₚ/eₒ pour une fraction volumique de l'âme V/Vₐ = 1, c'est à dire sans cavités 4. Les courbes 22 et 23 représentent ces mêmes rapports pour une fraction volumique de l'âme V/Vₐ = 0,75, et les courbes 24 et 25 représentent ces mêmes rapports pour une fraction volumique de l'âme V/Vₐ = 0,50.

La courbe 20 montre que le rapport de raideur K/Kₒ peut atteindre la valeur maximale 2 lorsque la pièce est fibreuse sur toute son épaisseur, c'est à dire lorsque la fraction d'épaisseur des peaux 2.eₚ/eₒ est égale à 1. Il est intéressant de constater que le rapport de raideur K/Kₒ se maintient à 1,85 et que le rapport de masse M/Mₒ correspondant donné par la courbe 21 tombe à 0,94 lorsque la fraction d'épaisseur des peaux 2.eₚ/eₒ est ramené à 0,25. En d'autres termes, alors que chaque peau 10 n'occupe que 12,5% de l'épaisseur de la pièce 1, la raideur de la pièce est augmentée de 85% et sa masse réduite de 6%.

Il est remarquable de constater, grâce aux courbes 24 et 25, que l'on augmente la raideur de la pièce de 80% et que, l'on diminue sa masse de 33% lorsque l'âme 2 est allégée de 50% et que chaque peau occupe 12,5% de l'épaisseur de la pièce, ce qui correspond respectivement aux valeurs K/Kₒ = 1,80, M/Mₒ = 0,67, V/Vₐ = 0,5 et 2.eₚ/eₒ = 0,25. Les courbes 22 et 23 correspondant à une fraction volumique de l'âme V/Vₐ = 0,75 donnent évidemment un résultat intermédiaire.

## Revendications

1. Procédé d'obtention de pièces métalliques minces, légères et rigides, ladite pièce étant référencée 1, ledit procédé comportant les opérations suivantes :
- réalisation d'une âme (2) mince en alliage métallique ;
- application sur chaque face (3) de l'âme (2) d'une peau (10) constituée de fibres de renfort ayant un module d'élasticité au moins égal à quatre fois celui de l'alliage métallique, lesdites fibres de renfort étant noyées dans une matrice en alliage métallique formant matrice,
- densification des peaux (10) par compression au moins dans le sens de l'épaisseur à la température de superplasticité de l'alliage métallique de la matrice, et soudage-diffusion desdites peaux (10) sur ladite âme (2) par compression dans le sens de l'épaisseur de la pièce (1) à la température de forgeage isotherme des alliages métalliques de l'âme (2) et de la matrice des peaux (10), **caractérisé en ce que** :
- on réalise dans l'âme (2) une pluralité de cavités (4) débouchantes au moins sur une face (3) de l'âme (2) ;
- on densifie les peaux (10) à la forme de l'âme (2) préalablement à leur application sur ladite âme (2), afin de constituer dans la pièce (1) des cavités (4) fermées au moins d'un côté par une peau (10) ayant localement une courbure sensiblement constante.

2. Procédé selon la revendication 1, **caractérisé en ce qu'**on emploie un alliage métallique pris dans le groupe des alliages à base de titane, de magnésium ou d'aluminium, et **en ce qu'**on emploie des fibres de renfort prises dans le groupe comprenant le carbure de silicium, le bore ou le carbone, afin d'associer un alliage métallique léger à des fibres de renfort à haute résistance et à haut module d'élasticité.

3. Procédé selon la revendication 1 ou 2, **caractérisé en ce que** le soudage est effectué par compression à la presse en matrice,

4. procédé selon la revendication 1 ou 2, **caractérisé en ce que** le soudage-diffusion étant effectué par compression isostatique en autoclave

5. Procédé selon l'une quelconque des revendications 1 à 4, ladite pièce(1) comportant des zones de liaison, **caractérisé en ce que** la fraction volumique de l'âme V/Vₐ est augmentée dans lesdites zones de liaison afin d'augmenter la résistance à l'écrasement de la pièce (1) dans lesdites zones de liaison.

6. Procédé selon la revendication 5, la pièce (1) étant une aube de turbomachine, ladite aube comportant une pale mince et un pied par lequel elle est maintenue, **caractérisé en ce qu'**on réalise une âme (2) s'étendant dans la pale et dans le pied, et **en ce qu'**on réalise dans l'âme (2) de la pale des cavités (4) avec une fraction volumique de l'âme V/Va réduite.

7. Procédé selon la revendication 6, **caractérisé en ce que** l'aube est réalisée en matrice.

8. Procédé selon l'une quelconque des revendications 1 à 7, **caractérisé en ce qu'**on réalise dans l'âme (2) des cavités (4) jointives selon des lignes appropriées, afin de constituer des canalisations entre les peaux (10).

9. Procédé selon la revendication 8, **caractérisé en ce que** les cavités (4) jointives ne débouchent chacune que d'un seul côté de l'âme (2), afin de maintenir la cohésion de ladite âme (2) pendant la réalisation de la pièce (1).

## Patentansprüche

1. Verfahren zum Herstellen dünner, leichter und starrer Metall-Teile, wobei dieses Teil mit 1 bezeichnet ist,
wobei das Verfahren die folgenden Vorgänge umfasst:
- Realisieren eines dünnen Kernteils (2) aus einer Metall-Legierung;
- Aufbringen einer aus Verstärkungs-Fasern, welche ein Elastizitäts-Modul aufweisen, welches wenigstens gleich vier Mal demjenigen der Metall-Legierung ist, gebildeten Haut (10) auf jeder Seite (3) des Kernteils (2), wobei diese Verstärkungs-Fasern in eine(r) Matrix aus Matrixbildender Metall-Legierung eingebettet sind,
- Verdichten der Häute (10) mittels Kompression, wenigstens in Richtung der Dicke, bei der Super-Plastizitäts-Temperatur der Metall-Legierung der Matrix, und Diffusions-Schweißen/Löten der Häute (10) auf das Kernteil (2) mittels Kompression in Richtung der Dicke des Teils (1) bei der isothermen Schmiedbarkeits-Temperatur der Metall-Legierungen des Kernteils (2) und der Matrix der Häute (10), **dadurch gekennzeichnet, dass**:
- im Kernteil (2) eine Mehrzahl von Hohlräumen (4) realisiert werden, welche wenigstens in/an eine(r) Seite (3) des Kernteils (2) einmünden;
- die Häute (10) vor ihrem Aufbringen auf das Kernteil (2) auf die Form des Kernteils (2) verdichtet werden, um in dem Teil (1) Hohlräume (4) zu bilden, welche wenigstens an einer Seite durch eine Haut (10) abgeschlossen sind, welche lokal eine im Wesentlichen konstante Krümmung aufweist.

2. Verfahren gemäß Anspruch 1, **dadurch gekennzeichnet, dass** eine Metall-Legierung verwendet wird, welche aus der Gruppe der Legierungen auf Basis von Titan, Magnesium oder Aluminium ausgewählt ist, und **dadurch**, dass Verstärkungs-Fasern verwendet werden, welche aus der Gruppe, welche Silizium-Carbid, Bor oder Kohlenstoff umfasst, ausgewählt sind, um einer leichten Metall-Legierung Verstärkungs-Fasern mit hoher Widerstandsfähigkeit und hohem Elastizitätsmodul zuzuordnen.

3. Verfahren gemäß Anspruch 1 oder 2, **dadurch gekennzeichnet, dass** das Schweißen/Löten durch Kompression in der Matrix-Presse bewirkt wird.

4. Verfahren gemäß Anspruch 1 oder 2, **dadurch gekennzeichnet, dass** das Diffusions-Schweißen/Löten durch isostatische Kompression im Autoklaven bewirkt wird.

5. Verfahren gemäß einem der Ansprüche 1 bis 4, wobei das Teil (1) Verbindungs-Zonen umfasst, **dadurch gekennzeichnet, dass** das Kernteil-Volumen-Verhältnis V/Vₐ in diesen Verbindungs-Zonen erhöht ist, um die Widerstandsfähigkeit gegenüber Brechen des Teils (1) in diesen Verbindungs-Zonen zu erhöhen.

6. Verfahren gemäß Anspruch 5, wobei das Teil (1) eine Turbomaschinen-Schaufel ist, wobei diese Schaufel umfasst: ein dünnes Blatt und einen Fuß, mittels welchem sie gehalten ist, **dadurch gekennzeichnet, dass** ein Kernteil (2) realisiert wird, welches sich in dem Blatt und in dem Fuß erstreckt, und **dadurch**, dass im Kernteil (2) des Blattes Hohlräume (4) mit einem reduzierten Kernteil-Volumen-Verhältnis V/Va realisiert werden.

7. Verfahren gemäß Anspruch 6, **dadurch gekennzeichnet, dass** die Schaufel als Matrix realisiert wird.

8. Verfahren gemäß einem der Ansprüche 1 bis 7, **dadurch gekennzeichnet, dass** im Kernteil (2) entlang geeigneter Linien verbundene Hohlräume (4) realisiert werden, um Kanäle zwischen den Häuten (10) zu bilden.

9. Verfahren gemäß Anspruch 8, **dadurch gekennzeichnet, dass** die verbundenen Hohlräume (4) jeweils nur in eine einzelne Seite des Kernteils (2) einmünden, um die Kohäsion des Kernteils (2) während des Realisierens des Teils (1) aufrecht zu halten.

## Claims

1. Process for obtaining thin, lightweight and rigid metal parts, said part being given the reference number 1, said process comprising the following operations:
- production of a thin core (2) made of a metal alloy;
- application, to each face (3) of the core (2), of a shell (10) consisting of reinforcing fibres having an elastic modulus at least equal to four times that of the metal alloy, said reinforcing fibres being embedded in a matrix made of a matrix-forming metal alloy;
- densification of the shells (10) by pressing at least in the thickness direction at the superplasticity temperature of the metal alloy of the matrix and diffusion-bonding of said shells (10) to said core (2) by pressing in the thickness direction of the part (1) at the isothermal forging temperature of the metal alloys of the core (2) and of the matrix of the shells (10), **characterized in that**:
- a plurality of cavities (4) is produced in the core (2), cavities which emerge at least on one face (3) of the core (2);
- the shells (10) are densified to the shape of the core (2) before they are applied to said core (2), so as to form, in the part (1) cavities (4) which are closed at least on one side by a shell (10) having locally an approximately constant curvature.

2. Process according to Claim 1, **characterized in that** a metal alloy taken from the group of titanium-magnesium- and aluminium-based alloys is employed and **in that** reinforcing fibres taken from the group comprising silicon carbide, boron and carbon are employed, so as to combine a light metal alloy with reinforcing fibres having a high strength and a high elastic modulus.

3. Process according to Claim 1 or 2, **characterized in that** the bonding is carried out by pressing in a die in the press.

4. Process according to Claim 1 or 2, **characterized in that** the diffusion bonding is carried out by isostatic pressing in an autoclave.

5. Process according to any one of Claims 1 to 4, said part (1) having fastening regions, **characterized in that** the volume fraction of the core V/V_{c} is increased in said fastening regions so as to increase the compressive strength of the part (1) in said fastening regions.

6. Process according to Claim 5, the part (1) being a turbomachine blade assembly, said blade assembly comprising a thin blade and a root by means of which it is held in place, **characterized in that** a core (2) is produced which extends into the blade and into the root and **in that** cavities (4) are produced in the core (2) of the blade with a reduced volume fraction of the core V/Vc.

7. Process according to Claim 6, **characterized in that** the blade assembly is made in a die.

8. Process according to any one of Claims 1 to 7, **characterized in that** touching cavities (4) are produced in the core (2) along appropriate lines so as to form ducts between the shells (10).

9. Process according to Claim 8, **characterized in that** the touching cavities (4) each emerge only on one side of the core (2), so as to maintain the cohesion of said core (2) during production of the part (1).
